# EUROPÄISCHE PATENTSCHRIFT

(11) **EP 1 395 461 B1**
(45) Veröffentlichungstag und Bekanntmachung des Hinweises auf die Patenterteilung: **08.10.2008**
(21) Anmeldenummer: 02748563.0
(22) Anmeldetag: 01.06.2002
(51) Int. Cl.: B60Q 1/14

(54) **LENKSTOCKSCHALTER FÜR KRAFTFAHRZEUGE**
STEERING COLUMN SWITCH FOR VEHICLES
COMMUTATEUR FIXE A LA COLONNE DE DIRECTION POUR VEHICULES A MOTEUR

(30) Priorität: 09.06.2001 DE 10128069; 24.08.2001 DE 10141578
(43) Veröffentlichungstag der Anmeldung: 10.03.2004
(73) Patentinhaber: Delphi Technologies Inc., Troy, MI 48007 (US)
(72) Erfinder: LENG, Peter, 55430 Oberwesel (DE)
(74) Vertreter: Denton, Michael John
(86) Internationale Anmeldenummer: PCT/DE2002/002022
(87) Internationale Veröffentlichungsnummer: WO 2002/100681

(56) Entgegenhaltungen:
- EP-A- 0 919 436
- DE-C- 19 920 547
- US-A- 6 020 563

## Beschreibung

Die Erfindung bezieht sich auf einen Lenkstockschalter für Kraftfahrzeuge, insbesondere als Heck- und Front-Wischer-/ Wascherschalter, mit zwei zueinander beabstandeten, in einen Schalthebel integrierten Drehschaltern, deren jeweils an einem Drehschaltglied festgelegte Kontaktbrücken mit mehreren Kontaktarmen Schaltkontaktbahnen mit zugehörigen Anschlusskontakten beaufschlagen, die mit Kontakten eines Bordnetzes verbunden sind.

Die gattungsgemäße DE 199 12 087 A1 offenbart einen Lenkstockschalter, der einen rotationssymmetrisch auf einer Längsachse eines Schalthebels des Lenkstockschalters angeordneten Drehschalter für die Front-Wischfunktionen umfasst. An dem freien Ende des Schalthebels ist ein Drucktastenschalter für eine Front-Waschfunktion angeordnet. Darüberhinaus ist auf dem Schalthebel dem Drehschalter für die Front-Wischfunktionen ein weiterer Drehschalter für die Heck-Wisch-/Waschfunktionen zugeordnet. Sowohl der Drehschalter für die Front-Wischfunktionen als auch der Drehschalter für die Heck-Wisch-/Waschfunktionen weist jeweils eine der Anzahl seiner Schaltstellungen entsprechende Anzahl von Kontaktbrücken auf, die zugehörige Schaltkontaktbahnen beaufschlagen. Die Kontaktbrücken sowie die zugeordneten Schaltkontaktbahnen verlaufen kreissegmentförmig zum Umfang eines Drehschaltgliedes des jeweiligen Drehschalters an einer Stirnseite des Drehschaltgliedes. Zur Betätigung der Front-Waschfunktion wird der zugeordnete Drucktastenschalter beaufschlagt, der über einen entsprechenden, mit einer Kontaktbrücke zusammenwirkenden Betätigungsstößel ebenfalls auf zugeordnete Schaltkontaktbahnen wirkt. Die Verbindung der Schaltkontaktbahnen zu Kontakten des Bordnetzes des Kraftfahrzeuges erfolgt mittels Anschlussleitungen, die an Anschlusskontakten befestigt sind und die durch die Längsachse des Lenkstockschalters geführt sind. Die Anzahl der Anschlussleitungen entspricht hierbei der Anzahl der Schaltkontaktbahnen. Bei einer vorgegebenen Anzahl von Schaltstellungen ist der Außendurchmesser des Schalthebels im Wesentlichen von dem Platzbedarf der Anschlussleitungen, insbesondere im Bereich von Kabeldurchführungen zwischen dem ersten und dem zweiten Drehschalter, abhängig, wobei die Anschlussleitungen einen bestimmten Querschnitt sowie eine Isolation aufweisen müssen.

Im Weiteren ist aus der DE 198 19 088 A1 eine flexible Leiterplatte bekannt, die eine Trägerfolie für Leiterbahnen umfasst und als Kabelbaum zum elektrischen Kontaktieren einer bestimmten Anordnung elektrischer und/oder elektronischer Komponenten dient. Derartige flexible Leiterplatten werden zunehmend als Ersatz herkömmlicher, aus Rundleitern bestehender Kabelbäume verwendet. Die einzelnen Leiterbahnen sind elektrisch voneinander isoliert angeordnet und weisen üblicherweise einen rechteckigen Querschnitt auf. Die Oberseiten der Leiterbahnen sind mittels eines Lackes oder einer Folie elektrisch isoliert.

Es ist Aufgabe der Erfindung, einen Lenkstockschalter der eingangs genannten Art zu schaffen, dessen Drehschalter unter geringem Platzbedarf mit dem Bordnetz verbunden sind.

Erfindungsgemäß wird die Aufgabe dadurch gelöst, dass
- die Anschlußkontakte über eine flexible Leiterplatte mit den Kontakten des Bordnetzes verbunden sind,
- die Leiterplatte ausgehend vom Anschluss an das Bordnetz, einen Strang aufweist, der in zwei Stränge mit jeweils einem Anschluss verzweigt, von denen einer in einen weiteren Strang mit einem Anschluss übergeht, und
- der Anschluss des zweiten Stranges dem einen Drehschalter und die Anschlüsse des dritten und vierten Stranges dem anderen Drehschalter zugeordnet sind.

Aufgrund dieser Maßnahmen ist der Platzbedarf für die elektrische Verbindung der beiden Drehschalter mit dem Bordnetz relativ gering, da zum einen die flexible Leiterplatte einen dünnen Aufbau aufweist und zum anderen die Leiterplatte zur Kopplung der Drehschalter mit dem Bordnetz in mehrere Stränge aufgeteilt ist. Im Weiteren ist durch die Flexibilität der Leiterplatte eine hohe Funktionssicherheit des Lenkstockschalters gewährleistet. Die Leiterplatte verformt sich sowohl entsprechend den Bewegungen des Schalthebels als auch den von den einzelnen Drehschaltern verursachten Bewegungen. Darüber hinaus ist die flexible Leiterplatte durch einfaches Durchfädeln durch einzelne Bauteile des Schalthebels relativ leicht zu montieren. Die einzelnen Stränge der Leiterplatte werden durch Freistanzungen der Leiterplattenfolie gefertigt.

Bevorzugt weist der erste Strang der Leiterplatte in der gestreckten Ebene ausgehend vom Anschluss an das Bordnetz, einen ersten geradlinigen Bereich auf, der über eine Abwinklung in einen zweiten geradlinigen Bereich übergeht, der parallel und beabstandet zum ersten Bereich ausgerichtet ist. Der Bereich der Abwinklung ist im Austrittsbereich der flexiblen Leiterplatte aus dem Schalthebel angeordnet und ermöglicht nach einer entsprechenden Verformung die Verbindung des Anschlusses mit den Kontakten des Bordnetzes sowie die für die Schwenkbewegung des Schalthebels erforderliche Flexibilität.

Zweckmäßigerweise verzweigt der zweite geradlinige Bereich des ersten Stranges in einer Ebene oberhalb des Anschlusses an das Bordnetz in den zweiten und den dritten Strang, die parallel zueinander ausgerichtet sind, wobei der zweite Strang endseitig den Anschluss trägt und sich der dritte Strang geradlinig über eine Ebene des Anschlusses hinaus erstreckt. Im weiteren Verlauf geht der dritte Strang in eine in Richtung des Anschlusses des zweiten Stranges verlaufende Abwinklung über, in der der Anschluss angeordnet ist. Schließlich geht der dritte Strang im Bereich seiner Abwinklung in den vierten Strang über, der endseitig den Anschluss trägt. Der Verlauf der einzelnen Stränge der Leiterplatte entspricht einer kabelbaumartigen Struktur und ist bei der Fertigung der Leiterplatte unter einem geringen Materialeinsatz zu realisieren.

Um die Verbindung der Anschlüsse mit den zugeordneten Anschlusskontakten der Schaltkontaktbahnen bzw. den Kontakten des Bordnetzes relativ einfach bewerkstelligen zu können, weisen der Anschluss für das Bordnetz, der Anschluss des zweiten Stranges und der Anschluss des dritten Stranges in die gleiche Richtung und der Anschluss des vierten Stranges weist in die demgegenüber entgegengesetzte Richtung.

Nach einer vorteilhaften Weiterbildung der Erfindung sind die Anschlußkontakte des ersten Drehschalters, der dem freien Ende des Schalthebels zugeordnet ist, in zwei zueinander diametral angeordnete und beabstandete Gruppen aufgeteilt, wobei die erste Gruppe mit dem Anschluss des dritten Stranges und die zweite Gruppe mit dem Anschluss des vierten Stranges der Leiterplatte verbunden ist. Da die Anschlußkontakte in zwei Gruppen vorgesehen sind, ist der Platzbedarf für die Vielzahl von Anschlusskontakten außerordentlich gering und gleichzeitig ist die Funktionalität des ersten Drehschalters gewährleistet.

Damit sich die Verbindung zwischen den Anschlusskontakten und den Kontakten des Bordnetzes mittels der flexiblen Leiterplatte nicht störend auf die Mechanik des ersten Drehschalters auswirkt, verläuft vorzugsweise der vierte Strang der Leiterplatte im montierten Zustand des ersten Drehschalters seitlich an einer an einem Zwischenring angeformten Drehachse vorbei.

In weiterer Ausgestaltung der Erfindung ist der vierte Strang der Leiterplatte aufgrund eines seitlich Rasthülsen lagernden Stegs des Zwischenrings im wesentlichen W-förmig verformt. Diese Verformung erfolgt bei der Montage selbsttätig und ist lediglich bei der Längendimensionierung des vierten Stranges zu beachten.

Um eine dauerhafte elektrische Verbindung zwischen den Anschlüssen und den zugehörigen Kontakten herzustellen, weisen die Anschlüsse Kontaktstellen auf, die jeweils mit den zugeordneten Anschlusskontakten oder den Kontakten des Bordnetzes verlötet sind.

Bevorzugt weist das Drehschaltglied des ersten Drehschalters einen von einer in den ersten Drehschalter eingesetzten Drucktaste zu betätigenden Kontaktarm zur Beaufschlagung zugeordneter Schaltkontaktbahnen auf. Somit ist ein weiterer Schalter in den Lenkstockschalter integriert, dessen elektrische Verbindung mit den Kontakten des Bordnetzes ohne zusätzlichen Platzbedarf über die flexible Leiterplatte erfolgt.

Zweckmäßigerweise sind die Schaltkontaktbahnen des ersten und des zweiten Drehschalters jeweils als umspritztes Stanzgitter ausgebildet, wobei die Schaltkontaktbahnen des ersten Drehschalters auf der Drehachse des Zwischenrings und die Schaltkontaktbahnen des zweiten Drehschalters auf einem Achsstummel eines Betätigungselementes des Drehschalters angeordnet sind. Die umspritzten Stanzgitter sind beim Verlöten mit den Anschlüssen der Leiterplatte sowie bei der Montage in dem Schalthebel problemlos handhabbar.

Es versteht sich, dass die vorstehend genannten und nachstehend noch zu erläuternden Merkmale nicht nur in der jeweils angegebenen Kombination sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:
- Fig.1: eine Explosionsdarstellung eines Schalthebels eines erfindungsgemäßen Lenkstockschalters und
- Fig.2: eine flexible Leiterplatte des Lenkstockschalters in der gestreckten Ebene.

In einen Schalthebel 1 des Lenkstockschalters ist stirnseitig eine federbelastete Drucktaste 2 für eine Front-Waschfunktion eingesetzt, die mittels zwei gegenüberliegender Klipsarme 3 beweglich in korrespondierende Aussparungen 4 eines Betätigungselementes 5 eines als Front-Wischer-/Wascherschalter ausgebildeten ersten Drehschalters 6 eingesetzt ist. Auf der dem Betätigungselement 5 zugeordneten Seite auf dem äußeren Umfang der Drucktaste 2 ist ein Betätigungsstößel 7 angeordnet, der ein Drehschaltglied 8 des ersten Drehschalters 6 durchragt.

Der erste Drehschalter 6 umfasst im Wesentlichen das verdrehbare Betätigungselement 5, in dem das Drehschaltglied 8 drehfest gehaltert ist. In dem Betätigungselement 5 ist umfangsseitig eine nicht dargestellte Rastung ausgebildet, die mit federbelasteten Rasthülsen 9 zusammenwirkt, wobei die Rasthülsen 9 in einem Steg 10 eines Zwischenrings 11 des Schalthebels 1 angeordnet sind. Das Zusammenwirken der Rastung mit den Rasthülsen 9 bewirkt ein sicheres Fixieren des ersten Drehschalters 6 in der gewünschten Schaltstellung. Das Drehschaltglied 8 weist auf seiner dem Zwischenring 11 zugewandten Stirnseite eine Kontaktbrücke für die Front-Wisch-/Waschfunktionen auf, wobei lediglich ein von dem Betätigungsstößel 7 der Drucktaste 2 zu beaufschlagender federnder Kontaktarm 12 für die Front-Waschfunktion zu erkennen ist. Die freien Enden der nicht dargestellten Kontaktarme weisen in die Richtung des Zwischenrings 11 und das freie Ende des Kontaktarmes 12 in die Richtung des Betätigungsstößels 7 der Drucktaste 2. Die freien Enden der Kontaktarme sind derart angeordnet, dass sie zur Übertragung der Front-Wischfunktionen mit als Stanzgitter 13 ausgebildeten Schaltkontaktbahnen 14 zusammenwirken. Um eine hinreichende Stabilität des Stanzgitters 13 zu erzielen, ist dieses umspritzt und drehfest auf einer Drehachse 14 des Zwischenrings 11 gelagert. Zur Verbindung des Stanzgitters 13 mit nicht dargestellten Kontakten eines Bordnetzes des Kraftfahrzeugs ist jede der Schaltkontaktbahnen 14 mit einem in Richtung eines Fußes 15 des Schalthebels 16 weisenden Anschlusskontakt 15 versehen.

Auf der dem Stanzgitter 13 abgewandten Seite des Zwischenringes 11 befindet sich ein als Heck-Wischer-/Wascherschalter ausgebildeter zweiter Drehschalter 17 mit einem nicht dargestellten Drehschaltglied, das in einem auf einem Achsstummel des Zwischenrings 11 gelagerten Betätigungselement 18 angeordnet ist. Das Betätigungselement 18 lagert umfangsseitig zwei Rasthülsen 19, die mit einer Rastung des Zwischenringes 11 zusammenwirken. Die als umspritztes Stanzgitter 20 ausgebildeten Schaltkontaktbahnen 21 des zweiten Drehschalters 17 sind in einem Gehäuse 22 des Schalthebels 1 drehfest gelagert und weisen Anschlußkontakte 23 auf, die sich in das Gehäuse 22 erstrecken. Eine Lagezentrierung des Stanzgitters 20 erfolgt zum einen über eine Achse des Betätigungselementes 18, die sich durch eine korrespondierende Bohrung 24 des Stanzgitters 20 erstreckt, und zum anderen über an dem Stanzgitter 20 angeformte Nasen 25, die in entsprechende gehäuseseitige Aussparungen 26 eingreifen.

Zur Befestigung des ersten Drehschalters 6 und des zweiten Drehschalters 17 an dem mit einem Deckel 27 versehenen Gehäuse 22 des Schalthebels 1 weist der Zwischenring 11 Klipsarme 45 auf, die entsprechende Ausnehmungen des Betätigungselementes 18 des zweiten Drehschalters 17 durchgreifen und mit Rastnasen des Gehäuses 22 zusammenwirken.

Im Weiteren sind an dem Fuß 15 des Schalthebels 1 Trägerachsstummel 28 zur schwenkbaren Lagerung des Schalthebels 1 in einem nicht dargestellten Lenkstockschaltergehäuse vorgesehen.

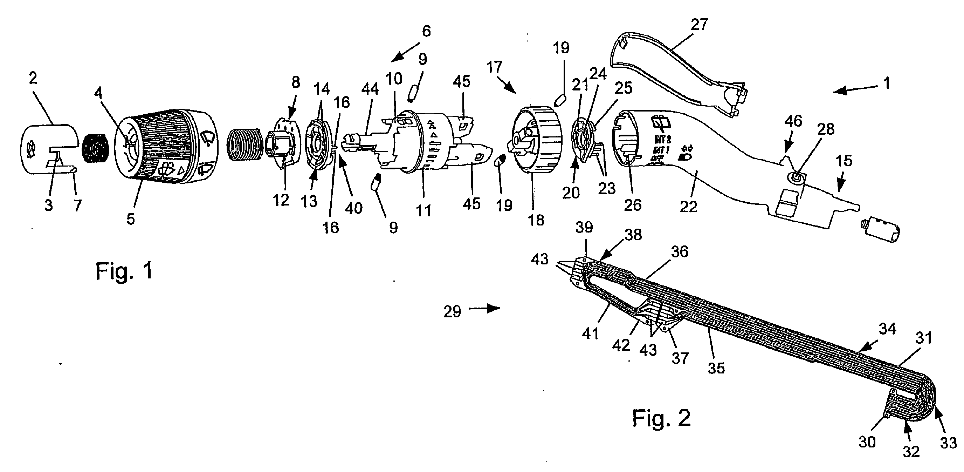

Zur Verbindung der Anschlußkontakte 16 der dem ersten Drehschalter 6 zugeordneten Schaltkontaktbahnen 14 und der Anschlußkontakte 23 der dem zweiten Drehschalter 17 zugeordneten Schaltkontaktbahnen 21 mit den Kontakten des Bordnetzes ist eine flexible Leiterplatte 29 vorgesehen, die in Fig. 2 in der gestreckten Ebene dargestellt ist. Ausgehend von einem Anschluss 30 für die Kontakte des Bordnetzes weist ein erster Strang 31 der Leiterplatte 29 einen ersten geradlinigen Bereich 32 auf, der über eine Abwinklung 33 in einen zweiten geradlinigen Bereich 34 übergeht. Der erste geradlinige Bereich 32 und der zweite geradlinige Bereich 34 des ersten Stranges 31 sind parallel und beabstandet zueinander ausgerichtet. In einer Ebene oberhalb des Anschlusses 30 verzweigt der zweite geradlinige Bereich 34 des ersten Stranges 31 in einen zweiten Strang 35 und einen dritten Strang 36, die parallel zueinander ausgerichtet sind. Der zweite Strang 35 trägt endseitig einen Anschluss 37 zur Verbindung mit den Anschlusskontakten 23 der dem zweiten Drehschalter 17 zugeordneten Schaltkontaktbahnen 21. Der dritte Strang 36 erstreckt sich geradlinig über eine Ebene des Anschlusses 37 des zweiten Stranges 35 hinaus und geht in eine in Richtung des Anschlusses 37 des zweiten Stranges 35 verlaufende Abwinklung 38 über. In der Abwinklung 38 ist ein Anschluss 39 für eine erste Gruppe 40 von Anschlusskontakten 16 der dem ersten Drehschalter 6 zugeordneten Schaltkontaktbahnen 14 vorgesehen. Im Weiteren geht der dritte Strang 36 in seiner Abwinklung 38 in einen vierten Strang 41 über, der endseitig einen Anschluss 42 für eine zweite Gruppe von Anschlusskontakten 16 der dem ersten Drehschalter 6 zugeordneten Schaltkontaktbahnen 14 trägt. Der Anschluss 30 für das Bordnetz, der Anschluss 37 des zweiten Stranges 35 und der Anschluss 39 des dritten Stranges 36 weisen in die gleiche Richtung und der Anschluss 42 des vierten Stranges 41 weist in die demgegenüber entgegengesetzte Richtung. Jeder der Anschlüsse 30, 37, 39, 42 weist Kontaktstellen 43 auf, die jeweils mit den zugeordneten Anschlusskontakten 16, 23 oder den Kontakten des Bordnetzes verlötet sind.

Bei der Montage des Schalthebels 1 werden der dritte Strang 36 und der vierte Strang 42 durch Aussparungen sowohl des Betätigungselementes 18 des zweiten Drehschalters 17 als auch durch Aussparungen des Zwischenringes 11 geführt und die Kontaktstellen 43 der Anschlüsse 39, 42 mit den zugeordneten Anschlusskontakten 16 der dem ersten Drehschalter 6 zugeordneten Schaltkontaktbahnen 14 verlötet. Beim Zusammenbau des ersten Drehschalters 6 wird das Stanzgitter 13 auf eine Drehachse 44 des Zwischenringes 11 gesetzt und durch Aufklipsen des Betätigungselementes 5 auf die Drehachse 44 gehalten. Hierbei übergreift der vierte Strang 41 den Steg 10 des Zwischenringes 11 derart, dass er sich W-förmig verformt. In das freie Ende des Betätigungselementes 5 wird die Drucktaste 2 eingeklipst. Ferner werden die Kontaktstellen des Anschlusses 37 des zweiten Stranges 35 mit den Anschlusskontakten 23 der dem zweiten Drehschalter 17 zugeordneten Schaltkontaktbahnen 21 verlötet und das Stanzgitter 20 auf den Achsstummel des Betätigungselementes 18 aufgesetzt. Sonach werden der erste 31, der zweite 35 und der dritte Strang 36 durch das Gehäuse 22 des Schalthebels 1 geführt und das Gehäuse 22 mit dem Deckel 27 verschlossen. Anschließend wird der Zwischenring 11 mittels seiner Klipsarme 45 in dem Gehäuse 22 festgelegt und das Betätigungselement 18 des zweiten Drehschalters 17 ist zwischen dem Zwischenring 11 und dem Gehäuse 22 gelagert. Der erste Strang 31 der Leiterplatte 29 wird im Bereich des Fußes 15 des Schalthebels 1 aus einer zwischen dem Deckel 27 und dem Gehäuse 22 gebildeten Öffnung 46 aus dem Schalthebel herausgeführt und mit den Kontakten des Bordnetzes verbunden.

### Bezugszeichenliste

- 1.: Schalthebel
- 2.: Drucktaste
- 3.: Klipsarm
- 4.: Aussparungen
- 5.: Betätigungselement
- 6.: erster Drehschalter
- 7.: Betätigungsstößel
- 8.: Drehschaltglied
- 9.: Rasthülse
- 10.: Steg
- 11.: Zwischenring zug
- 12.: Kontaktarm
- 13.: Stanzgitter
- 14.: Schaltkontaktbahn
- 15.: Fuß
- 16.: Anschlusskontakt
- 17.: zweiter Drehschalter
- 18.: Betätigungselement
- 19.: Rasthülse
- 20.: Stanzgitter
- 21.: Schaltkontaktbahn
- 22.: Gehäuse
- 23.: Anschlusskontakt
- 24.: Bohrung
- 25.: Nase
- 26.: Aussparung
- 27.: Deckel
- 28.: Trägerachsstummel
- 29.: Leiterplatte
- 30.: Anschluss
- 31.: erster Strang
- 32.: erster geradliniger Bereich
- 33.: Abwinklung
- 34.: zweiter geradliniger Bereich
- 35.: zweiter Strang
- 36.: dritter Strang
- 37.: Anschluss von 35
- 38.: Abwinklung von 36
- 39.: Anschluss von 36
- 40.: Gruppe
- 41.: vierter Strang
- 42.: Anschluss von 41
- 43.: Kontaktstelle
- 44.: Drehachse
- 45.: Klipsarm
- 46.: Öffnung

## Patentansprüche

1. Lenkstockschalter für Kraftfahrzeuge, insbesondere als Heck- und Front-Wischer-/Wascherschalter, mit zwei zueinander beabstandeten, in einen Schalthebel (1) integrierten Drehschaltern (6, 17), deren jeweils an einem Drehschaltglied (8) festgelegte Kontaktbrücken mit mehreren Kontaktarmen Schaltkontaktbahnen (14, 21) mit zugehörigen Anschlusskontakten (16, 23) beaufschlagen, die mit Kontakten eines Bordnetzes verbunden sind, **dadurch gekennzeichnet, dass**
- die Anschlußkontakte (16, 23) über eine flexible Leiterplatte (29) mit den Kontakten des Bordnetzes verbunden sind,
- die Leiterplatte (29), ausgehend vom Anschluss (30) an das Bordnetz, einen Strang (31) aufweist, der in zwei Stränge (35, 36) mit jeweils einem Anschluss (37, 38) verzweigt, von denen einer in einen weiteren Strang (41) mit einem Anschluss (42) übergeht, und
- der Anschluss (37) des zweiten Stranges (35) dem einen Drehschalter (17) und die Anschlüsse (39, 42) des dritten (36) und vierten Stranges (41) dem anderen Drehschalter (6) zugeordnet sind.

2. Lenkstockschalter nach Anspruch 1, **dadurch gekennzeichnet, dass** der erste Strang (31) der Leiterplatte (29) in der gestreckten Ebene ausgehend vom Anschluss (30) an das Bordnetz einen ersten geradlinigen Bereich (32) aufweist, der über eine Abwinklung (33) in einen zweiten geradlinigen Bereich (34) übergeht, der parallel und beabstandet zum ersten Bereich (32) ausgerichtet ist.

3. Lenkstockschalter nach Anspruch 2, **dadurch gekennzeichnet, dass** der zweite geradlinige Bereich (34) des ersten Stranges (31) in einer Ebene oberhalb des Anschlusses (30) an das Bordnetz in den zweiten (35) und den dritten Strang (36) verzweigt, die parallel zueinander ausgerichtet sind, wobei der zweite Strang (35) endseitig den Anschluss (37) trägt und sich der dritte Strang (36) geradlinig über eine Ebene des Anschlusses (37) hinaus erstreckt.

4. Lenkstockschalter nach Anspruch 1 oder 3, **dadurch gekennzeichnet, dass** der dritte Strang (36) in eine in Richtung des Anschlusses (37) des zweiten Stranges (35) verlaufende Abwinklung (38) übergeht, in der der Anschluss (39) angeordnet ist.

5. Lenkstockschalter nach Anspruch 4, **dadurch gekennzeichnet, dass** der dritte Strang (36) im Bereich seiner Abwinklung (38) in den vierten Strang (41) übergeht, der endseitig den Anschluss (42) trägt.

6. Lenkstockschalter nach einem der Ansprüche 1 bis 5,
**dadurch gekennzeichnet, dass** der Anschluss (30) für das Bordnetz, der Anschluss (37) des zweiten Stranges (35) und der Anschluss (38) des dritten Stranges (36) in die gleiche Richtung weisen und der Anschluss (42) des vierten Stranges (41) in die demgegenüber entgegengesetzte Richtung weist.

7. Lenkstockschalter nach einem der Ansprüche 1 bis 6,
**dadurch gekennzeichnet, dass** die Anschlußkontakte (16) des ersten Drehschalters (6), der dem freien Ende des Schalthebels (1) zugeordnet ist, in zwei zueinander diametral angeordnete und beabstandete Gruppen aufgeteilt sind, wobei die erste Gruppe (40) mit dem Anschluss (38) des dritten Stranges (36) und die zweite Gruppe mit dem Anschluss (42) des vierten Stranges (41) der Leiterplatte (29) verbunden ist.

8. Lenkstockschalter nach einem der Ansprüche 1 bis 7,
**dadurch gekennzeichnet, dass** der vierte Strang (41) der Leiterplatte (29) im montierten Zustand des ersten Drehschalters (6) seitlich an einer an einem Zwischenring (11) angeformten Drehachse (44) vorbei verläuft.

9. Lenkstockschalter nach Anspruch 8, **dadurch gekennzeichnet, dass** der vierte Strang (41) der Leiterplatte (29) aufgrund eines seitlich Rasthülsen (9) lagernden Stegs (10) des Zwischenrings (11) im wesentlichen W-förmig verformt ist.

10. Lenkstockschalter nach Anspruch 8, **dadurch gekennzeichnet, dass** die Anschlüsse (30, 37, 38, 42) Kontaktstellen (43) aufweisen, die jeweils mit den zugeordneten Anschlusskontakten (16, 23) oder den Kontakten des Bordnetzes verlötet sind.

11. Lenkstockschalter nach einem der Ansprüche 1 bis 10,
**dadurch gekennzeichnet, dass** das Drehschaltglied (8) des ersten Drehschalters (6) einen von einer in den ersten Drehschalter (6) eingesetzten Drucktaste (2) zu betätigenden Kontaktarm (12) zur Beaufschlagung zugeordneter Schaltkontaktbahnen (14) aufweist.

12. Lenkstockschalter nach einem der Ansprüche 1 bis 11,
**dadurch gekennzeichnet, dass** die Schaltkontaktbahnen, (14) des ersten (6) und des zweiten Drehschalters (17) jeweils als umspritztes Stanzgitter (13, 20) ausgebildet sind, wobei die Schaltkontaktbahnen (14) des ersten Drehschalters (6) auf der Drehachse (44) des Zwischenrings (11) und die Schaltkontaktbahnen (21) des zweiten Drehschalters (17) auf einem Achsstummel eines Betätigungselementes (18) des Drehschalters (17) angeordnet sind.

## Claims

1. Steering column switch for motor vehicles, in particular as rear window and windscreen wiper/washer switch, having two spaced-apart rotary switches (6, 17) which are integrated in a switch lever (1) and of which the contact bridges, which are in each case fixed to a rotary switch member (8), act by several contact arms on switch contact strips (14, 21) having associated terminal contacts (16, 23) which are connected to contacts of the vehicle's electrical system, **characterised in that**
- the terminal contacts (16, 23) are connected by a flexible printed circuit board (29) to the contacts of the vehicle's electrical system,
- the printed circuit board (29), starting from the terminal (30) connecting to the vehicle's electrical system, has a section (31) which branches into two sections (35, 36) each having a terminal (37, 38), one of which merges with a further section (41) having a terminal (42), and
- the terminal (37) of the second section (35) is associated with one rotary switch (17) and the terminals (39, 42) of the third (36) and fourth (41) sections are associated with the other rotary switch (6).

2. Steering column switch according to claim 1, **characterised in that** the first section (31) of the printed circuit board (29) has in the elongated plane, starting from the terminal (30) connecting to the vehicle's electrical system, a first rectilinear region (32) which merges via an angled portion (33) with a second rectilinear region (34) which is oriented parallel to and spaced apart from the first region (32).

3. Steering column switch according to claim 2, **characterised in that** the second rectilinear region (34) of the first section (31) branches, in a plane above the terminal (30) connecting to the vehicle's electrical system, into the second (35) and third (36) sections which are oriented parallel to each other, the second section (35) terminally carrying the terminal (37) and the third section (36) extending rectilinearly beyond a plane of the terminal (37).

4. Steering column switch according to claim 1 or 3, **characterised in that** the third section (36) merges with an angled portion (38) which runs in the direction of the terminal (37) of the second section (35) and in which the terminal (39) is arranged.

5. Steering column switch according to claim 4, **characterised in that** the third section (36) merges in the region of its angled portion (38) with the fourth section (41) which terminally carries the terminal (42).

6. Steering column switch according to any of claims 1 to 5, **characterised in that** the terminal (30) for the vehicle's electrical system, the terminal (37) of the second section (35) and the terminal (38) of the third section (36) point in the same direction, and the terminal (42) of the fourth section (41) points in the direction opposite thereto.

7. Steering column switch according to any of claims 1 to 6, **characterised in that** the terminal contacts (16) of the first rotary switch (6) which is associated with the free end of the switch lever (1) are divided into two groups arranged diametrically to each other and spaced apart, the first group (40) being connected to the terminal (38) of the third section (36) and the second group being connected to the terminal (42) of the fourth section (41) of the printed circuit board (29).

8. Steering column switch according to any of claims 1 to 7, **characterised in that** the fourth section (41) of the printed circuit board (29) in the assembled state of the first rotary switch (6) runs laterally past a rotary shaft (44) formed integrally on an intermediate ring (11).

9. Steering column switch according to claim 8, **characterised in that** the fourth section (41) of the printed circuit board (29) is substantially W-shaped due to a web (10) of the intermediate ring (11) which supports latch bushes (9) laterally.

10. Steering column switch according to claim 8, **characterised in that** the terminals (30, 37, 38, 42) have contact points (43) which are in each case soldered to the associated terminal contacts (16, 23) or to the contacts of the vehicle's electrical system.

11. Steering column switch according to any of claims 1 to 10, **characterised in that** the rotary switch member (8) of the first rotary switch (6) has a contact arm (12) to be actuated by a pushbutton (2) inserted in the first rotary switch (6) for acting on associated switch contact strips (14).

12. Steering column switch according to any of claims 1 to 11, **characterised in that** the switch contact strips (14) of the first (6) and second (17) rotary switches are in each case designed as a pressed screen (13, 20) surrounded by injection moulding, the switch contact strips (14) of the first rotary switch (6) being arranged on the rotary shaft (44) of the intermediate ring (11), and the switch contact strips (21) of the second rotary switch (17) being arranged on a bearing journal of an actuating element (18) of the rotary switch (17).

## Revendications

1. Commutateur sur colonne de direction pour véhicules automobiles, en particulier commutateur pour essuie-glace/lave-glace avant et arrière, comprenant deux commutateurs rotatifs (6, 17) écartés l'un de l'autre et intégrés dans un levier de commutateur (1), dont les ponts de contacts respectifs fixés sur un élément de commutateur rotatif (8) attaquent par plusieurs bras de contact des pistes de contact de commutateurs (14, 21) avec des contacts de raccordements associés (16, 23) qui sont reliés à des contacts d'un réseau de bord, **caractérisé en ce que** :
- les contacts de raccordement (16, 23) sont reliés aux contacts du réseau de bord via une plaque à circuits imprimés flexible (29),
- la plaque à circuits imprimés (29), partant du raccordement (30) au réseau de bord, présente un brin qui se ramifie en deux brins (35, 36) avec un raccordement respectif (37, 38), l'un des brins se transformant en un autre brin (41) avec un raccordement (42), et
- le raccordement (37) du second brin (35) est associé à l'un des commutateurs rotatifs (17) et les raccordements (39, 42) du troisième (36) et du quatrième (41) brins sont associés à l'autre commutateur rotatif (6).

2. Commutateur sur colonne de direction selon la revendication 1, **caractérisé en ce que** le premier brin (31) de la plaque à circuits imprimés (29) comprend, dans le plan d'étirement et en partant du raccordement (30) au réseau de bord, une première zone rectiligne (32) qui se transforme via un coudage (33) en une seconde zone rectiligne (34) qui est orientée parallèlement et à distance de la première région (32).

3. Commutateur sur colonne de direction selon la revendication 2, **caractérisé en ce que** la seconde zone rectiligne (34) du premier brin (31) se ramifie dans un plan au-dessus du raccordement (30) au réseau de bord, pour donner le second (35) et le troisième brin (36) qui sont orientés parallèlement l'un à l'autre, le second brin (35) portant le raccordement (37) du côté de l'extrémité, et le troisième brin (36) s'étendant en ligne droite au-delà d'un plan du raccordement (37).

4. Commutateur sur colonne de direction selon la revendication 1 ou 3, **caractérisé en ce que** le troisième brin (36) se transforme en un coudage (38) qui s'étend en direction du raccordement (37) du second brin (35), le raccordement (39) étant agencé dans ledit coudage.

5. Commutateur sur colonne de direction selon la revendication 4, **caractérisé en ce que** le troisième brin (36) se transforme, dans la zone de son coudage (38), pour donner le quatrième brin (41) qui porte le raccordement (42) du côté de l'extrémité.

6. Commutateur sur colonne de direction selon l'une des revendications 1 à 5, **caractérisé en ce que** le raccordement (30) pour le réseau de bord, le raccordement (37) du second brin (35) et le raccordement (38) du troisième brin (36) sont orientés dans la même direction, et le raccordement (42) du quatrième brin (41) est orienté dans la direction opposée à ceux-ci.

7. Commutateur sur colonne de direction selon l'une des revendications 1 à 6, **caractérisé en ce que** les contacts de raccordement (16) du premier commutateur rotatif (6) qui est associé à l'extrémité libre du levier de commutateur (1) sont subdivisés en deux groupes agencés diamétralement l'un par rapport à l'autre et écartés, le premier groupe (40) étant relié au raccordement (38) du troisième brin (36) et le second groupe étant relié au raccordement (42) du quatrième brin (41) de la plaque à circuits imprimés.

8. Commutateur sur colonne de direction selon l'une des revendications 1 à 7, **caractérisé en ce que** le quatrième brin (41) de la plaque à circuits imprimés (29) s'étend, dans l'état monté du premier commutateur rotatif (6), latéralement en passant à côté d'un axe de rotation (44) conformé sur une bague intermédiaire (11).

9. Commutateur sur colonne de direction selon la revendication 8, **caractérisé en ce que** le quatrième brin (41) de la plaque à circuits imprimés (29) est déformé sensiblement en forme de W, en raison d'une barrette (10), portant latéralement des douilles d'enclenchement (9), de la bague intermédiaire (11).

10. Commutateur sur colonne de direction selon la revendication 8, **caractérisé en ce que** les raccordements (30, 37, 38, 42) comportent des points de contact (43) qui sont respectivement soudés sur les contacts de raccordements associés (16, 23) ou sur les contacts du réseau de bord.

11. Commutateur sur colonne de direction selon l'une des revendications 1 à 10, **caractérisé en ce que** l'organe de commutation rotatif (8) du premier commutateur rotatif (6) comprend un bras de contact (12), à actionner par une touche de pression (2) mise en place dans le premier commutateur rotatif (6), pour venir attaquer des pistes de contact associées (14) du commutateur.

12. Commutateur sur colonne de direction selon l'une des revendications 1 à 11, **caractérisé en ce que** les pistes de contact (14) du premier (6) et du second (17) commutateur rotatif sont réalisées respectivement sous forme de grillages estampés (13, 20) surmoulés, les pistes de contact (14) du premier commutateur rotatif (6) étant agencées sur l'axe de rotation (44) de la bague intermédiaire (11) et les pistes de contact (21) du second commutateur rotatif (17) étant agencées sur un moignon d'arbre d'un élément d'actionnement (18) du commutateur rotatif (17).
